# EUROPEAN PATENT APPLICATION

(11) **EP 1 223 711 A2**
(43) Date of publication of application: **17.07.2002**
(21) Application number: 02250027.6
(22) Date of filing: 03.01.2002
(51) Int. Cl.: H04L 12/40, G06F 9/46

(54) **Method of and apparatus for transmitting data in a distributed processor system**

(30) Priority: 09.01.2001 GB 0100535
(71) Applicant: Lucas Industries Limited, West Midlands B90 4LA (GB)
(72) Inventor: Ellis, Ivan Keith, Birmingham B30 3DD (GB)
(74) Representative: Beck, Simon Antony

(57) **Abstract**

A transmission scheme in a loosely synchronised distributed data processing system having a plurality of nodes is provided in which each message is given a priority based on its scheduled transmission time in the transmission cycle. Thus, if a message is delayed, it has priority over all subsequently scheduled messages.

## Description

The present invention relates to a method of and an apparatus for transmitting data within a distributed data processing system.

It is known to provide control systems for controlling complex items of equipment. GB 2337347 discloses a distributed data processing system for controlling an aircraft engine. The processing system comprises a plurality of independent processing units interconnected via a data bus. Thus, each processing unit can receive data and perform computations locally based on that data. Each unit may also be able to control an associated device. However, in order that the system can function as a whole, each unit must also be able to exchange data with other units forming part of the control system.

In the system described in GB 2337347, an aircraft engine control system is disclosed which comprises three units. A first unit, such as a fan-case unit, includes various transducers which sense engine operating input variables, such as air pressure, air temperature, and so on, and also receives input from cockpit transducers such that the pilot's demands of the engine can be ascertained. A second unit, known as a core unit, receives data such as rotational speed of the engine turbine, internal air pressures, temperatures, pump speeds and so on. This unit typically processes this data, in combination with data supplied from the fan case unit, in order to generate a measure of fuel demand. A third unit, which is a fuel control unit, is associated with the fuel flow valves and fuel pressure transducers and provides a fast response closed loop control of fuel flow in the engine in order to obtain the fuel flow demanded by the core unit.

The units are independent, and as such have independent clock generators and are linked together by a serial bus which enables them to share data.

Although the units are independent, they must act in a defined way with respect to one another in order to control the engine. It is therefore desirable that the units are loosely synchronised with one another and that the transmission of data from one unit to another occurs in an orderly manner without undue delay. It would be possible to achieve this by either having the data transmission co-ordinated by one of the units, for example the core unit, such that each device was polled in turn, or by enabling each module to transmit data as and when it wished to, and the other modules to be interrupted once data was received in their receive buffers. However, either of these approaches would require the use of interrupts which is undesirable in any safety critical application as the system may then operate in a non-deterministic manner as it would not be possible to predict the order in which control events occurred. In order to overcome this, GB 2337347 discloses the use of synchronising pulses such that each unit periodically receives a reference enabling it to set its own internal counter. Each unit may then also keep a measure of how well synchronised it remains with the rest of the system. If a unit determines that it is lagging the timing master unit by more than a predetermined time period, then it can commence a new timing cycle immediately it receives a synchronisation pulse. If a unit determines that it is leading the master unit by more than a predetermined time interval, then it can restart its operating cycle once it receives the synchronisation pulse. However, if a unit determines that it has lost near synchronisation with the rest of the system, it may enter a revised operating mode, where it may, for example, suspend processing during its current processing cycle and prepare itself for re-synchronisation to the master clock.

Whilst the units are synchronised, they are still required to exchange data in an orderly manner. The data channel has only a limited bandwidth and hence the data flow needs to be controlled throughout the operating cycle of the distributed data processing system. Thus, the cycle can be subdivided into a number of time windows with various items of data scheduled for transmission in each specific one of the windows. However, because the data processors are only loosely synchronised, it is still necessary to provide a mechanism for resolving contentions on the data link. This has hitherto been done by assigning a priority identifier to each item of data to be transmitted with those items which are regarded as more important being given a higher priority. Thus, in the event of contention between two units wishing to transmit concurrently, a bus arbiter examines the priority assigned to each item of data and selects the most important for transmission first.

According to a first aspect of the present invention, there is provided a method of transmitting data within a distributed data processing system having a plurality of nodes interconnected via a data channel, wherein the data processing system has a data transmission cycle subdivided into a plurality of transmission periods, each period able to support the transmission of a plurality of data transmission events, and each node is allocated at least one data transmission event in at least one of the transmission periods, and a priority is associated with each transmission event, the priority being determined by the scheduled transmission time of the transmission event.

It is thus possible to provide a method of transmitting data between nodes of a distributed system wherein the message transmission is deterministic in that it can be guaranteed that a message will be received within a predetermined time period from its scheduled transmission period.

The move to prioritising the message by its nominal transmission time rather than by its content is significant. It would intuitively be expected that priorities should be accorded on the basis of the information contained in the message.

However, this does not necessarily work well in distributed data processing systems where the nodes are only approximately synchronised.

Consider the example of an aircraft engine management system where a plurality of measurements are to be made and transmitted to other nodes, and where the measurements are analysed and commands issued to control the engine. In such a safety critical environment these actions need to be predictable and to be performed on a cyclical basis. The cycle typically has a 10ms repeat time and is subdivided into 10 transmission periods, each of 1mS duration.

Each node is free running but is approximately synchronised with the other nodes. However, the fact that the internal clocks can drift a little means that, for example, messages that were scheduled for transmission in the third transmission period as measured at one node may be transmitted in a fourth transmission period as measured at another node. However, here they may now come into conflict with the messages scheduled for transmission in the fourth period. Since the data channel can only transmit a predetermined number of messages, this may mean that some of the messages scheduled for transmission in the third or fourth periods may not be able to transmit in that period. Thus these messages may be held back to a subsequent transmission period, having a knock on effect within the data system.

As noted above, the messages in this prior art system have a priority associated with them which is determined by the message content. Thus the message in this example which was scheduled for the third transmission period but which has slipped to the fourth period may now be in conflict with messages from the fourth transmission period which have a higher priority. Thus the delayed message may not have sufficient priority to transmit in the fourth message period and may be held over to the fifth transmission period. Here it again has to contend with messages scheduled for the fifth transmission period so there is the possibility that the delayed message may be further delayed or may cause another message to be delayed.

Although it is possible to work out the maximum delay that a message may experience in such a system, the calculation can be complex. Furthermore if there are constraints on the maximum delay that can be accepted for a given message, the assignment of message priorities to ensure that it arrives whilst not exceeding the maximum delay for other messages is a complex task.

The present invention moves away from the intuitive method of assigning transmission priority based on message content but instead assigns priority by position in the transmission schedule. This means that a delayed message will take priority over all subsequently scheduled messages. However, the maximum delay that a message may experience is now much reduced.

Preferably the distributed data processor system is arranged such that transmissions over the data channel are not controlled by a master node. Thus rather than waiting to be polled by a master or being passed a control token, each node can attempt transmitting its message when the scheduled transmission time for that message, as determined by the node, arrives.

Advantageously one of the nodes is arranged to generate a synchronisation signal which is sent to each other node such that each node receiving the synchronisation signal may adjust its internal clock to maintain synchronisation.

Preferably the schedule of data transmissions is selected such that there is excess capacity for message transmission towards the end of the data transmission cycle.

This enables any delayed message to be transmitted before a new cycle commences.

Preferably the messages transmitted towards the end of the transmission cycle are of lower importance than messages transmitted earlier in the cycle and/or relate to instructions, data or measurement that change relatively slowly. Thus, if the data system's operation becomes sufficiently perturbed such that it is unable to complete all of the scheduled message transmissions within a transmission cycle, then the messages which fail to transmit are only of low importance and the data processors that were waiting for those messages can temporarily use the most recent historical values or a default value, which ever is most appropriate of the data that would have been contained in the missing messages until such time as the data processing system re-establishes normal operation.

Preferably each node has a communications interface with the data channel such that simultaneous attempts to transmit data from different nodes will be resolved rapidly by arbitration between the communications interfaces.

Preferably each data transmission event (ie each message or instruction sent) has a unique priority identifier. Thus there can never be simultaneous requests to the bus for message transmission of the same priority.

Preferably message priorities are assigned such that no two messages have priorities which differ by an exact power of 2. This means that corruption of a single bit within the priority will result in an invalid priority identifier. This prevents the erroneous acceptance of a different message if such a corruption occurs.

According to a second aspect of the present invention there is provided a method of transmitting data within a distributed data processing system having a plurality of nodes connected via a data pathway wherein the nodes are substantially synchronised to a reference and at least one node attempts to transmit a predetermined item of data at a scheduled transmission time, as measured locally within a node, following the reference, and wherein each item of data is associated with a unique priority identifier, with the priority identifier indicating that the priority of a message reduces as the scheduled transmission time of a message increases, and wherein nodes expecting to receive a message check for its receipt within a receipt window following the scheduled transmission of the message.

According to a third aspect of the present invention, there is provided a distributed data processing system having a plurality of nodes interconnected via a data channel, wherein the data processing system has a data transmission cycle subdivided into a plurality of transmission periods, each period able to support the transmission of a plurality of data transmission events, and at least one node is allocated at least one data transmission event in at least one of the transmission periods, and a priority is associated with each transmission event, the priority being determined by the scheduled transmission time of the transmission event.

According to a fourth aspect of the present invention, there is provided a distributed data processing system having a plurality of nodes connected via a data pathway, wherein the nodes are substantially synchronised to a reference and at least one node attempts to transmit a predetermined item of data at a scheduled transmission time as measured locally within a node following the reference; and wherein each item of data is associated with a unique priority identifier, with the priority identifier indicating that the priority of a message reduces as the scheduled transmission time of a message increases, and wherein nodes expecting to receive a message check for its receipt within a receipt window following the scheduled transmission of the message.

The present invention will further be described, by way of example, with reference to the accompanying drawings, in which:
Figure 1 schematically illustrates a distributed data processing system forming part of an aircraft engine control system;
Figure 2 schematically illustrates a prior art message priority system;
Figure 3 schematically illustrates a message priority system constituting an embodiment of the present invention; and
Figure 4 schematically illustrates the relation between data type and priority identifier within a distributed data processing system constituting an embodiment of the present invention.

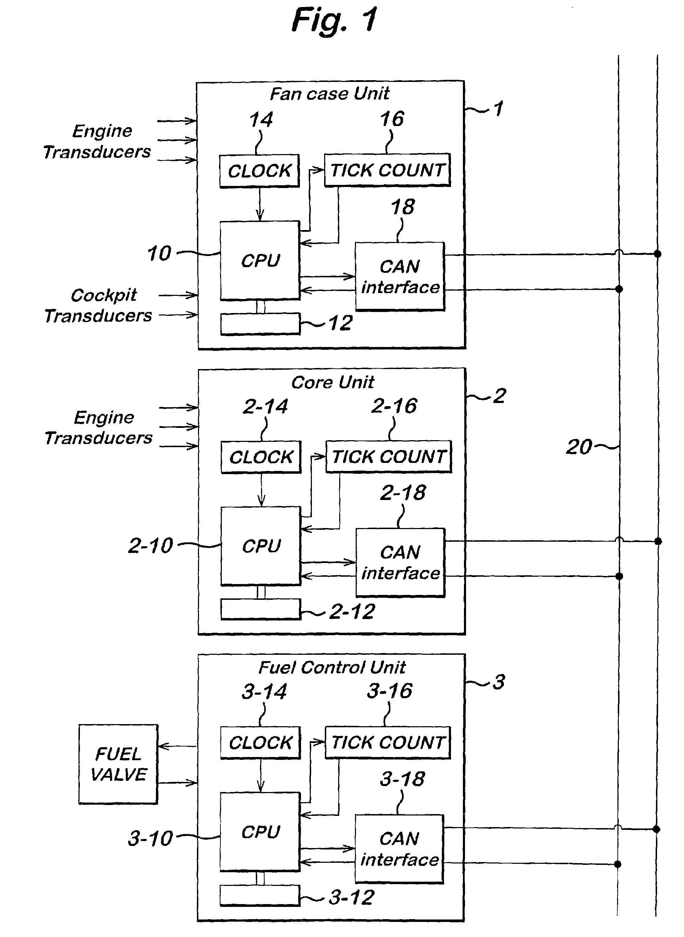

Figure 1 schematically illustrates a distributed data processing system for controlling an aircraft engine. The processing system comprises a fan case unit 1, a core unit 2 and a fuel control unit 3. The internal construction of each unit is conceptionally similar, and consequently only the construction of the fan case unit 1 will be described in detail. The unit 1 comprises a CPU 10 which interfaces with an associated memory 12 which serves to hold program code and intermediate variables. The CPU 10 is driven from an associated clock 14 and in turn uses this to generate a periodic timing signal every one or two milliseconds which is sent to and counted by a tick counter 16. The number of ticks counted by the tick counter 16 can be examined by the CPU to determine the time elapsed since the last synchronisation signal, and it can also be examined when the next synchronisation signal arrives to determine how far out of synchronisation the unit has become to the timing master unit. The CPU also exchanges data with a controller area network (CAN) interface 18 which is connected to a data bus 20.

Similar components are found in the core unit and fuel control unit, and are designated with the same reference numeral prefixed by "2-" for the core unit and "3-" for the fuel control unit.

The fan case unit receives inputs from engine and cockpit transducers and processes these to provide measurements of power demand and engine performance to the core unit 2. The core unit 2 also receives inputs from engine transducers and processes these together with the information received from the fan case unit in order to derive a fuel demand value. This information is passed to the fuel control unit 3 which receives data from fuel system pressure and flow rate sensors and position transducers on a fuel control valve in order to derive a drive signal to the fuel control valve. The fuel control unit provides a local control loop but nevertheless may be arranged to pass data concerning its performance back to the core unit 2.

The synchronisation's scheme for maintaining the units in approximate synchronisation has been disclosed in GB 2337347A and consequently does not need to be described further here.

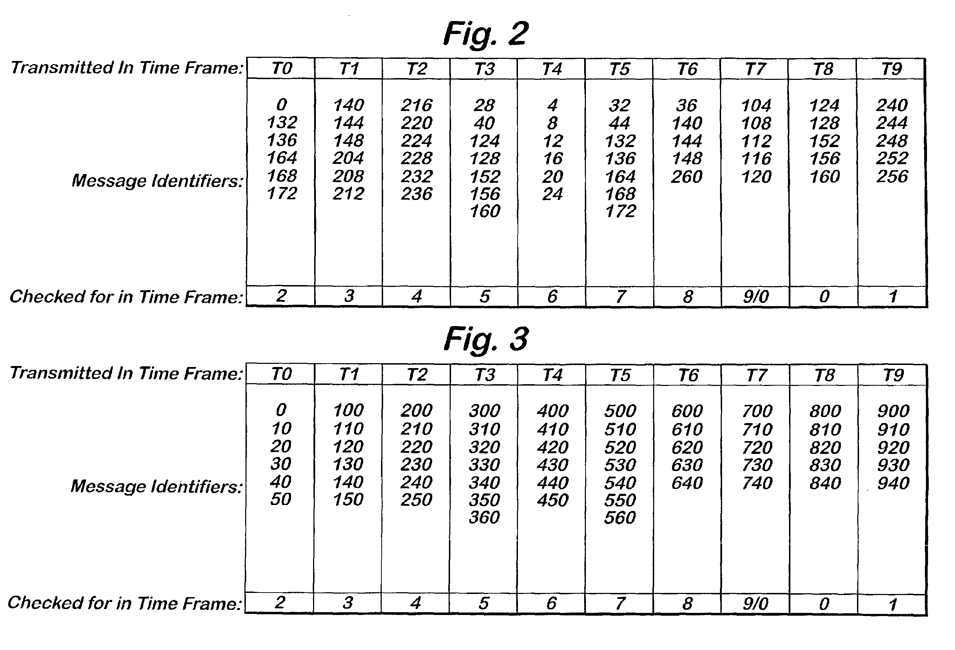

There are a number of messages which need to be transmitted from unit to unit within the distributed control system. Figure 2 schematically illustrates a timing regime for achieving this. The data processing system has a control cycle time which, for example, may be approximately 10 milliseconds long. The cycle time is subdivided into ten 1 millisecond time slots, indicated as time frames T0 to time frames T9 in Figure 2. As indicated, in each time frame several messages may be transmitted, with messages possibly being transmitted by more than one node. Each message has in the prior art been associated with a priority which is determined by the importance placed on that parameter by the system designer. The lower the message identifier number, then the more important the message is. Thus, in Figure 2, messages having identifiers 0, 132, 136, 164, 168 and 172 are scheduled for transmission in time frame T0 spanning the first 1 millisecond of the operating cycle. It should be noted that some messages are transmitted more than once in a complete operating cycle and, for example, the message having priority 132 is transmitted again in frame number T5.

Given that only one message can be transmitted on the bus 20 at a time, the messages in time frame T0 are transmitted sequentially. If all the messages originate from one node, then the node merely stacks them in priority sequence and then transmits them. However, if the messages originate from more than one node there is a risk that the nodes may seek to transmit their data simultaneously. If this occurs, the CAN interfaces of the nodes perform bus arbitration in order to ensure that only one unit seeks to transmit at any given time and that priority is accorded to the message having the lowest message identifier number.

As noted hereinbefore, the units 1, 2 and 3 are not rigidly synchronised. Thus, if the unit attempting to transmit the message having identifier 172 in time frame T0 lags behind some of the other units, there is a possibility that the unit trying to transmit message 140 in the first time frame T1 will come into conflict with the unit trying to transmit message 172 in the zero-ith time frame T0 because the time frames partially overlap from one unit to another. If this occurs, then the CAN interfaces will arbitrate between the transmission requests and give message 140 priority over message 172. It is also therefore likely that messages 144 and 148 will take priority over message 172. This causes the message 172 to become delayed. The situation could become even worse considering time frame T2 if for example messages 232 or 236 were to come into timing contention with message 28 sent from a different node in time frame 3 as a result of the time frames at different nodes being slightly out of temporal alignment. All of the messages identified in time frame 3, time frame 4 and time frame 5 have a greater priority than the last message of time frame 2. Thus, it is possible that the message could become significantly delayed, possibly as far as time frame 6 if there were many nodes on the system and the nodes were sufficiently out of synchronisation. Thus, although the scheme is deterministic in that its performance can be calculated and consequently the worst case latency between a message being submitted for transmission and actually being transmitted can be calculated, the real time performance of the system may nevertheless vary significantly in operation.

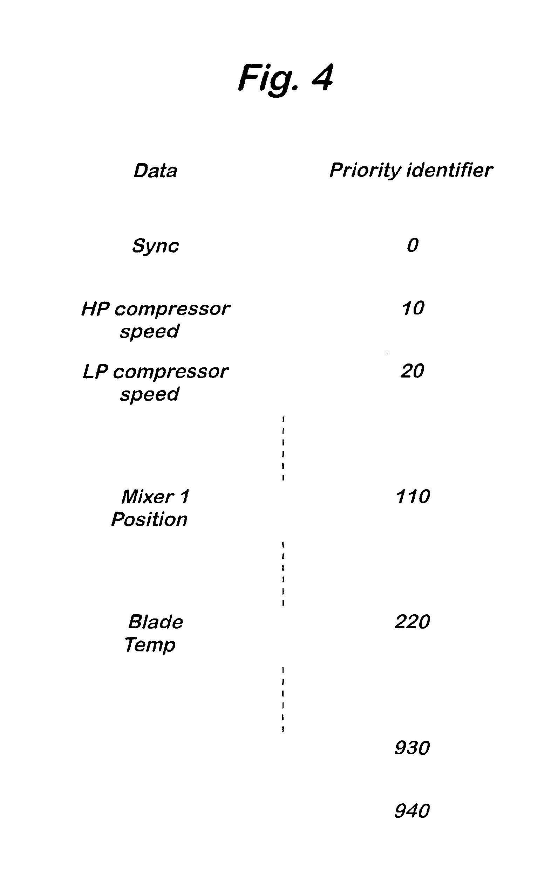

Figure 3 schematically illustrates a revised transmission scheme constituting an embodiment of the present invention. Again, the cycle time in this example is divided into ten frames labelled frame T0 to frame T9. Furthermore, the same messages are to be transmitted in the example shown in Figure 3 as was the case in the example shown in Figure 2. The time frame in which each message is to be transmitted and its message identifier priority are determined by the system designer after due consideration of the functions being implemented at each node and the timing thread requirements. The schedule of message transmissions should then be set within the transmission scheme by the designer in order to meet the timing requirements as closely as possible.

Message priorities are then assigned based on the position of a message within the message transmission cycle. For example, with reference to Figure 4, the synchronisation signal is assigned message priority zero thereby assuring that it is given the highest priority within the transmission scheme. The high pressure compressor speed may, for example, be assigned priority identifier 10, the low pressure compressor speed may be assigned priority identifier 20, and so on up to identifier 940.

Following the synchronisation pulse, one or more of the nodes may attempt to transmit the messages having priorities 10 to 50. An attempt is made to transmit these in time frame T0 and nodes expecting to receive these items of data look for them in time frame T2. Should any item of data from time frame zero come into contention with an item of data from time frame T1 because of temporal misalignment between the processing nodes, the items in time frame T0 will have the higher transmission priority and consequently their arrival before the commencement of time frame T2 (as measured using the local clock at any node) will be assured. Thus, the worst latency that a message may be subjected to amounts to one time frame and consequently its delivery can be assured after two time frames. Put another way, if two nodes drift such that the Nth time frame at one node starts to overlap with the (N+1)th time frame of another node the messages scheduled for the Nth time frame will always take priority over those scheduled for the (N+1)th time frame and their delivery is assured in the (N+2)th time frame.

Some parameters may be transmitted more than once per bus transmission cycle, thus, referring to Figure 2, item-132 was transmitted in frames T0 and T5. This still occurs in the arrangement shown in Figure 3, but now the messages have different identifiers, namely 10 and 520.

As described in GB 2337347, if a node is running slower than the timing master node there is a possibility that it will receive a synchronisation pulse during what it regards as time frame T9. This gives rise to several possibilities. Firstly, messages transmitted in time frame T7 may be received in time frame T9 by the node which acts as the timing master (most likely to core unit 2), but these messages could be received in frames T9 or T0 by all other nodes. Also, because the receipt of a synchronisation pulse by a node which is lagging behind the timing master may result in the ninth time frame being abruptly truncated for that node, then only the timing master can transmit in frame T9 as it cannot be guaranteed that other nodes will always have a frame T9. Messages in frame T9 may be delayed until frame zero due to the drift of messages from frame T8 into frame T9. Frame T9 messages will always be pre-empted by messages in all other frames. Therefore the number of messages in frame T8 and frame T9 scheduled for transmission should be limited thereby giving transmission redundancy towards the end of the transmission cycle. In the above example, each frame can support the transmission of ten messages but frames T8 and T9 only have five messages in each frame. Thus any messages delayed in frame T8 into frame T9 can still be transmitted in frame T9. Also, any messages in frame T9 which become delayed due to conflict with a higher priority message from frame 8 will still also be transmitted in frame T9.

It is thus possible to provide an improved method of transmission of data between loosely synchronised nodes in a multiprocessor distributed data processing system.

It should also be noted that, by arranging for the message identifiers to be assigned such that no two messages have priorities which differ by an exact power of 2, this ensures that any single bit corruption of a message identifier programmed to be received by the CAN interface 18 will not result in a valid identifier for the system. In particular, it will not transform from one valid identifier into another valid identifier. This prevents erroneous acceptance of the wrong message if such a single bit corruption occurs. It should be noted that the normal CAN error checking will detect corruption of the identifier during transmission. This assignment of message identifiers further removes the danger that a CAN interface may corrupt to accept the wrong message.

## Claims

1. A method of transmitting data within a distributed data processing system having a plurality of nodes (1, 2, 3) interconnected via a data channel (20), wherein the data processing system has a data transmission cycle subdivided into a plurality of transmission periods, each period able to support the transmission of a plurality of data transmission events, **characterised in that** a priority is associated with each transmission event, the priority being determined by the scheduled transmission time of the transmission event.

2. A method as claimed in claim 1, **characterised in that** each node is allocated at least one transmission event in the transmission cycle.

3. A method as claimed in claim 1 or 2, **characterised in that**, since priorities are assigned on the basis of scheduled transmission time, a delayed transmission takes priority over all subsequently scheduled transmissions.

4. A method as claimed in any one of the preceding claims, **characterised in that** a synchronisation signal is transmitted by one of the nodes (2) and is defined as the most significant message within the transmission scheme.

5. A method as claimed in claim 4, **characterised in that** the synchronisation signal is transmitted first in any data transmission cycle.

6. A method as claimed in any one of the preceding claims in which any nodes expecting to receive a specific item of data scheduled for transmission in a Nth transmission period checks for the data in a (N+2)th transmission period.

7. A method as claimed in any one of the preceding claims, **characterised in that** the final two transmission periods of the transmission cycle have fewer scheduled transmissions allocated to them, such that there is sufficient spare transmission capacity to transmit any delayed transmissions and the scheduled ones within these transmission periods.

8. A method as claimed in any one of the preceding claims, in which messages transmitted towards the end of the transmission cycle are of lower importance than messages scheduled for earlier transmission.

9. A method as claimed in claim 4 or any other claim based thereon, in which a node (1, 2, 3) receiving the synchronisation signal (0) adjusts an internal clock (16) to maintain synchronisation.

10. A method as claimed in any one of the preceding claims, in which each node is arranged to attempt to transmit data when the scheduled time for the transmission of the data is reached.

11. A method as claimed in any one of the preceding claims, **characterised in that** each node includes a communications interface with bus arbitration therein such that bus contentions are resolved.

12. A method as claimed in any one of the preceding claims, in which none of the priorities associated with the messages differ by an exact power of 2, such that corruption of a single bit in the priority identifier results in an invalid identifier.

13. A method of transmitting data within a distributed data processing system having a plurality of nodes (1, 2, 3) connected via a data pathway (20), wherein the nodes are substantially synchronised to a reference and at least one node attempts to transmit a predetermined item of data at a scheduled transmission time, as measured locally within a node, following the reference, and wherein each item of data is associated with a unique priority identifier, with the priority identifier indicating that the transmission priority of a message reduces as the scheduled transmission time of the message increases, and wherein nodes (1, 2, 3) expecting to receive a particular message check for its receipt within a receipt window following the scheduled transmission of the message.

14. A distributed data processing system having a plurality of nodes (1, 2, 3) interconnected via a data channel (20), wherein the data processing system has a data transmission cycle subdivided into a plurality of transmission periods (T0, T1, ... T9), each period able to support the transmission of a plurality of transmission events, and at least one node is allocated at least one transmission event in at least one of the transmission periods (T0, T1, ... T9), and a priority is associated with each transmission event, the priority being determined by the scheduled transmission time of the transmission event.

15. A distributed data processing system as claimed in claim 14, **characterised in that** each node transmits its data when the scheduled transmission time for the data, as determined by a timer (16) within the node, arrives; and each node further includes a bus interface (18) which resolves bus contentions based on message priority.

16. A distributed data processing system as claimed in claim 14 or 15, **characterised in that** a delayed transmission takes precedence over all subsequently scheduled transmission events within a transmission cycle.

17. A distributed data processing system as claimed in any one of claims 14 to 16, in which one of the nodes (1, 2, 3) is responsible for periodically generating a timing reference signal, to which other nodes are synchronised.

18. A data transmission system having a plurality of nodes connected via a data pathway, wherein the nodes are substantially synchronised to a reference and at least one node attempts to transmit a predetermined item of data at a scheduled transmission time as measured locally within a node following the reference; and wherein each item of data is associated with a unique priority identifier, with the priority identifier indicating that the priority of a message reduces as the scheduled transmission time of a message within the transmission cycle increases.
